**Europäisches Patentamt**

**European Patent Office**

**Office européen des brevets**

(19)

(11) Veröffentlichungsnummer: **0 285 757 B1**

# EUROPÄISCHE PATENTSCHRIFT

(12)

(45) Veröffentlichungstag der Patentschrift: **11.09.91**

(51) Int. Cl.⁵: **B01J 8/04,** //C01C1/04

(21) Anmeldenummer: **88101518.4**

(22) Anmeldetag: **03.02.88**

(54) **Vorrichtung zur katalytischen Behandlung von Stickstoff und Wasserstoff.**

(30) Priorität: **26.03.87 DE 3710004**

(43) Veröffentlichungstag der Anmeldung:
**12.10.88 Patentblatt 88/41**

(45) Bekanntmachung des Hinweises auf die
Patenterteilung:
**11.09.91 Patentblatt 91/37**

(84) Benannte Vertragsstaaten:
**AT BE DE ES FR GB IT NL**

(56) Entgegenhaltungen:
**EP-A- 0 222 069**
**DE-A- 3 146 778**

**Ullmanns Enzyklopädie der technischen**
**Chemie, 4. Auflage 1974, Bd.7, S.482 ff**

(73) Patentinhaber: **Uhde GmbH**
**Friedrich-Uhde-Strasse 15**
**W-4600 Dortmund 1(DE)**

(72) Erfinder: **Herbort, Hans-Joachim, Dipl.-Ing.**
**Unnaer Strasse 65B**
**W-5758 Fröndenberg(DE)**
Erfinder: **Graeve, Heinz, Dipl.-Ing.**
**Bittermarkstrasse 33A**
**W-4600 Dortmund 50(DE)**

(74) Vertreter: **Patentanwälte Meinke und Dabring-**
**haus Dipl.-Ing. J. Meinke Dipl.-Ing. W. Dab-**
**ringhaus**
**Westenhellweg 67**
**W-4600 Dortmund 1(DE)**

## Beschreibung

Die Erfindung richtet sich auf eine Vorrichtung zur katalytischen Behandlung von Stickstoff und Wasserstoff mit wenigstens einem in einem Druckbehälter axial konzentrisch angeordneten Wärmetauscher und diesen umgebenden Katalysatorbett, mit einer zentrisch angeordneten Zuführglocke zur Zuführung des Gases zum Rohrbündel des Wärmetauschers und mit einer Umlenkung des die Wärmetauscherrohre verlassenden Gases zur Durchströmung des ersten Katalysatorbettes radial von außen nach innen.

Eine gattungsgemäße Vorrichtung ist z.B. aus der DE-A 27 10 247 in mehreren Ausführungsformen oder aus DE-A 31 46 778 bekannt. Den bekannten Lösungen ist gemeinsam, daß die das erste Katalysatorbett verlassenden und den Wärmetauscher beaufschlagenden Gase entweder im Kopfbereich des ersten Katalysatorbettes außen um dieses herum zum nächsten Katalysatorbett geführt werden oder eine Ableitung nach unten im Außenbereich des Wärmetauschers in der Nähe der Katalysatorbetten erfolgt.

Die bekannten Lösungen weisen gewisse Schwierigkeiten bei der Regelung auf, z.B. u.a. auch dann, wenn die Eintrittstemperatur in das zweite Katalysatorbett geregelt werden soll. Auch sind die bekannten Lösungen häufig technisch vergleichsweise aufwendig, was die Montage und Demontage angeht u. dgl. mehr.

Aufgabe der Erfindung ist daher die Schaffung einer Lösung, mit der insbesondere die Regelung der Temperaturen und der Gasströme vor Eintritt in die jeweiligen Katalysatorbetten vereinfacht, die Montage optimiert und die Wartung vereinfacht wird.

Bei einer Vorrichtung der eingangs bezeichneten Art wird diese Aufgabe gemäß der Erfindung dadurch gelöst, daß im Inneren des ersten Rohrbündelwärmetauschers ein konzentrisches Ableitrohr für das die Wärmetauscherrohre von in Schwerkraftrichtung gesehen unten nach oben umströmende, das erste Katalysatorbett verlassende Gas vorgesehen ist, wobei das zentrische Ableitrohr mit oberen Sammelöffnungen für dieses Gas versehen ist.

Es hat sich gezeigt, daß das zentrische Ableitrohr eine Reihe von besonderen Vorteilen mit sich bringt. So kann der Wärmetauscher als Paket um dieses Ableitrohr herum gestaltet sein, was dessen Montage und Demontage stark vereinfacht. Die Anordnung der oberen Sammelöffnungen nach Austritt aus dem ersten Katalysatorbett bewirken für das Reaktionsgas eine U-Strömung mit den damit verbundenen Vorteilen. Gleichzeitig kann das zentrische Ableitrohr zur Übernahme weiterer Aufgaben herangezogen werden, wie dies weiter unten noch beschrieben ist.

In Ausgestaltung sieht die Erfindung vor, daß das zentrische Ableitrohr mit einer Quenchgaszuführleitung zum Einspeisen eines Regelgases in den Kopfbereich dieses zentrischen Ableitrohres ausgerüstet ist.

Mit dieser Gestaltung ist es möglich, die Eintrittstemperatur des das zentrische Ableitrohr durchströmenden Gases in ein nachgeschaltetes zweites Katalysatorbett mit einfachen Mitteln zu regeln. Bei den bekannten Lösungen müßte dies in einem wenigstens von der Strömung her gesehenen, nicht näher definierten Vorraum geschehen, womit nicht sichergestellt ist, daß auch die gewünschten Temperaturen wirklich an allen Stellen des Eintrittes in das weitere Katalysatorbett erreicht werden. Dies macht die Erfindung mit einfachen Mitteln möglich.

Zweckmäßig kann es sein, wenn wenigstens ein Quenchgasrohr den Rohrbündelwärmetauscher bis zum Austrittsbereich der Wärmetauscherrohre zum Einspeisen von Quenchgas durchsetzt. Wobei aber insbesondere nach der Erfindung vorgesehen ist, daß eine Mehrzahl von derartigen Quenchgaszuführleitungsrohren das Wärmetauscherrohrbündel durchsetzt und über eine gemeinsame Ringleitung beaufschlagbar sind.

Mit dieser Gestaltung ist es möglich, auch mit einfachen Mitteln die Eintrittstemperatur der Gase in das erste Katalysatorbett zu regeln je nach Austrittstemperatur der vorgewärmten Gase aus dem ersten Wärmetauscher.

Eine konstruktiv zweckmäßige Gestaltung besteht darin, daß der nach oben aushebbare zentrische Wärmetauscher einen unteren Rohrboden aufweist, der auf einem Kragen am unteren Ende des Katalysatorbettes aufsitzt.

Wie bekannt, sind die die beschriebenen Elemente aufnehmenden Druckgefäße häufig mit einem oberen Abschlußdeckel versehen, derart, daß die Montage von Wärmetauschern, Katalysatorbetten u. dgl. durch den oberen Bereich hindurch erfolgt. Die Erfindung vereinfacht die Montage und Demontage in ganz erheblicher Weise, da der Wärmetauscher in das Innere des ersten Katalysatorbettes von oben ohne Probleme eingesetzt werden kann und sofort seinen Halt auf dem Kragen des Katalyatorbettes findet.

Die Erfindung sieht dabei auch vor, daß zwischen unterem Rohrboden des Wärmetauschers und dem Kragen am Katalysatorbett eine Dichtung, wie beispielsweise eine Labyrinthdichtung, vorgesehen ist. Dabei kann der untere Rohrboden auch über eine Distanzverschraubung mit dem unteren Kragen des Katalysatorbettes verschraubt sein. Selbstverständlich sind hier auch andere Befestigungsmöglichkeiten mit umfaßt.

Einer einfachen Montierbarkeit und Demontierbarkeit dient auch eine Ausgestaltung, die darin besteht, daß die Ringleitung mit den Quenchgasrohren an Flanschen von im Wärmetauscher vorgesehenen Hüllrohren nach oben auswechselbar befestigt ist und/oder daß das Quenchgasrohr für ein folgendes Katalysatorbett im Kopfbereich des ortsfest montierten zentrischen Ableitrohres über eine Montageplatte am Kopf dieses Ableitrohres nach oben ausbaubar befestigt ist.

Schließlich sieht die Erfindung auch vor, daß der die Zuströmöffnung aufweisende Rohrkopf des zentrischen Ableitrohres an letzterem über eine von oben manipulierbare und lösbare flexible Verbindung befestigt ist.

Die Erfindung ist nachstehend anhand der Zeichnung beispielsweise näher erläutert. Diese zeigt in

Fig. 1  eine Vorrichtung nach der Erfindung im Schnitt,

Fig. 2 und 3  Ausschnitte aus dem Kopfbereich des Wärmetauschers in vergrößerter Darstellung sowie in

Fig. 4 und 5  Einzelheiten im Ausschnitt in vergrößerter Darstellung aus dem Fußbereich des ersten Wärmetauschers.

Die allgemein mit 1 bezeichnete Vorrichtung besteht im dargestellten Beispiel aus einem senkrecht aufgestellten Druckgefäß 2 mit einem oberen, das Druckgefäß 2 abdichtenden Druckdeckel 3 und einer nicht näher dargestellten Standkonstruktion 4.

Im Inneren sind zwei Katalysatorbetten 5 und 6 konzentrisch angeordnet, wobei das erste Katalysatorbett 5 wiederum in seinem Inneren konzentrisch einen Röhrenwärmetauscher 7 umschließt.

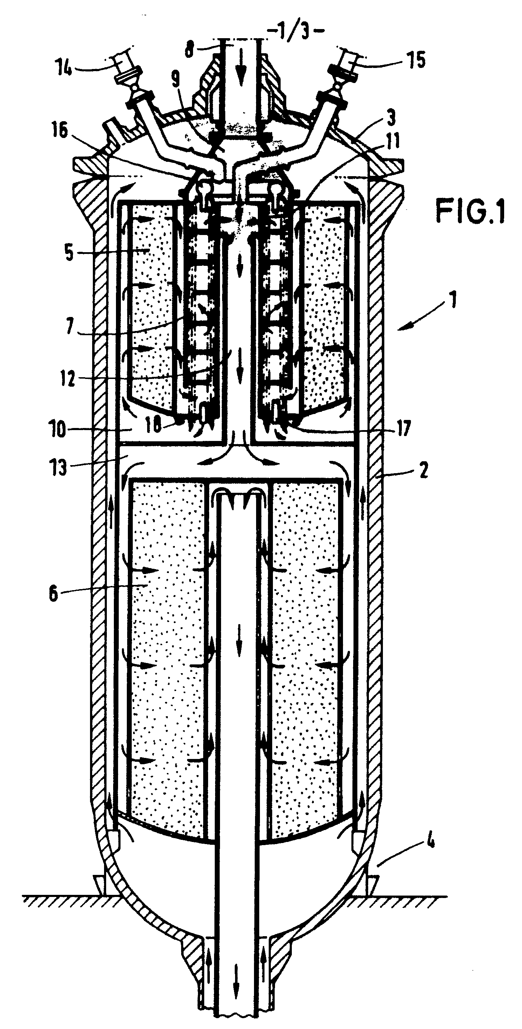

Die zu behandelnden Gase, z.B. Stickstoff und Wasserstoff, treten durch einen oberen Stutzen 8 ein und werden über eine Zuführglocke 9 dem Wärmetauscher 7 zugeführt. Nach Durchströmen der Wärmetauscherrohre 7a treten die Gase unten in einem Ringraum 10 aus, werden seitlich nach oben an das Katalysatorbett 5 herangeführt, durchströmen dieses und erneut den Wärmetauscher 7 um schließlich durch obere Sammelöffnungen 11 in ein konzentrisches innenliegendes Ableitrohr 12 einzutreten, was in Fig. 1 durch kleine Pfeile angedeutet ist. Das Sammelrohr 12 beaufschlagt in Schwerkraftrichtung nach unten gesehen eine Vorkammer 13 für das zweite Katalysatorbett 6.

Für die Erfindung von Bedeutung sind zwei Quenchgaszuführleitungen 14 bzw. 15 im Deckel 3 des Druckbehälters 2. Die Quenchgasleitung 14 beaufschlagt eine Ringleitung 16, von der ein Ausschnitt in Fig. 3 näher dargestellt ist. Von dieser Ringleitung 16 gehen den Röhrenwärmetauscher 7 durchsetzende Falleitungen 17 aus, die das Rohrbündel vollständig von oben nach unten durchsetzen und unten in der Ringkammer 10 enden, wie sich dies aus Fig. 1 ergibt. Damit kann Quenchgas über Ringleitungen 16 und die Falleitungen 17 direkt in die untere Ringkammer 10, d.h. vor Eintritt in das erste Katalysatorbett den Gasen zugemischt werden.

Die Quenchgasleitung 15 mündet im oberen Kopfbereich des zentralen Ableitrohres 12 und kann den durch die oberen Sammelöffnungen 11 eintretenden Gasen zugemischt werden. Damit ist es möglich, das in das zweite Katalysatorbett 6 eintretende Gas zu beeinflussen.

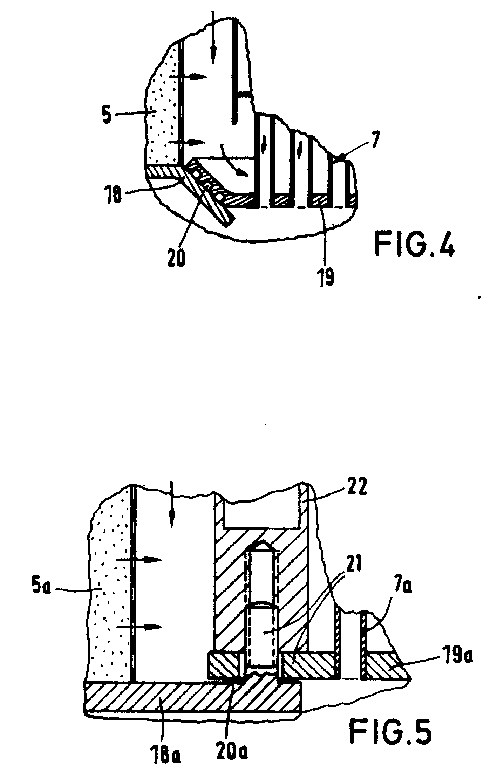

Um eine optimale Ein- und Ausbaubarkeit zu erreichen, sitzt der im Inneren angeordnete Röhrenwärmetauscher 7 auf einen unteren Kragen 18 bzw. 18a des ersten Katalysatorbettes 5, wie dies andeutungsweise in den Fig. 4 bzw. 5 dargestellt ist. Beim Ausführungsbeispiel gemäß Fig. 4 ist der Kragen 18 leicht nach innen in einem Winkel nach unten geneigt, um so die Auflagefläche für einen unteren Rohrboden 19 des Röhrenwärmetauschers 7 zu bilden. Die Abstützung aneinander ist im dargestellten Beispiel mit einer Labyrinthdichtung 20 versehen, die in Fig. 4 ebenfalls angedeutet ist.

Eine etwas andere Gestaltung zeigt die Fig. 5. Dort ist der Kragen 18a waagerecht ausgebildet. Dort ist eine übliche Dichtung 20a vorgesehen. Der Rohrboden 19a ist über eine Distanzverschraubung 21 dort befestigt, das entsprechende Distanzrohr ist mit 22 bezeichnet.

Natürlich sind auch kombinierte Lösungsmöglichkeiten zwischen Labyrinthdichtung und Distanzverschraubung möglich.

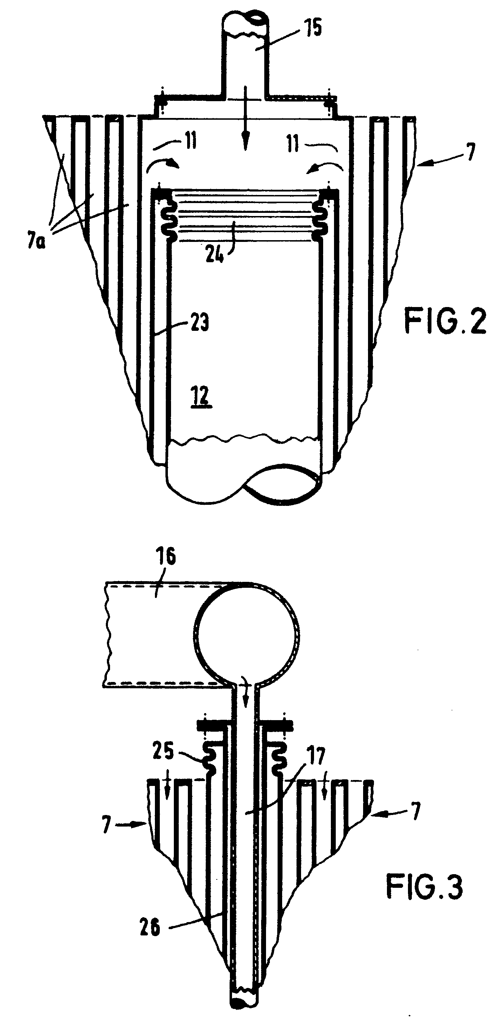

In den Fig. 2 und 3 sind die oberen Verschraubungsmöglichkeiten angedeutet, und zwar zwischen dem ortsfest befestigten Ableitrohr 12 und einem dieses umgebenden Hüllrohres, wobei dort eine elastische Verbindung, mit 24 bezeichnet, vorgesehen ist. Auch das obere Quench- bzw. Trimmgasrohr 15 ist über eine von oben betätigbare Verschraubung am Wärmetauscher 7 befestigt. Eine ähnliche Verbindung besteht auch zwischen der Ringleitung 16 und den Falleitungen 17 einerseits und dem Wärmetauscher 7 andererseits. Auch dort ist ein flexibles Abdichtelement 25 zwischen einem Hüllrohr 26 und den sonstigen Befestigungen vorgesehen. Das flexible Abdichtelement 25 bzw. auch das Abdichtelement 24 kann z.P. von einem Kompensator oder einer Stopfbuchse vorgesehen sein, ohne daß die Erfindung hierauf beschränkt wäre.

Es sei noch bemerkt, daß das Hüllrohr 26 nicht von einem Gas durchströmt ist, so daß es isolierend wirkt, was jeweils erwünscht ist.

**Patentansprüche**

1.  Vorrichtung zur katalytischen Behandlung von Stickstoff und Wasserstoff mit wenigstens einem in einem Druckbehälter axial konzentrisch angeordneten Wärmetauscher und diesen umgebenden Katalysatorbett, mit einer zentrisch angeordneten Zuführglocke zur Zuführung des Gases zum Rohrbündel des Wärmetauschers und mit einer Umlenkung des die Wärmetauscherrohre verlassenden Gases zur Durchströmung des ersten Katalysatorbettes radial von außen nach innen,
dadurch gekennzeichnet,
daß im Inneren des ersten Rohrbündelwärmetauschers (7) ein konzentrisches Ableitrohr (12) für das die Wärmetauscherrohre (9) von in Schwerkraftrichtung gesehen unten nach oben umströmende, das erste Katalysatorbett (5) verlassende Gas vorgesehen ist, wobei das Ableitrohr (12) mit oberen Sammelöffnungen (11) für dieses Gas versehen ist.

2. Vorrichtung nach Anspruch 1,
dadurch gekennzeichnet,
daß das zentrische Ableitrohr (12) mit einer Quenchgaszuführleitung (15) zum Einspeisen eines Regelgases in den Kopfbereich des zentrischen Ableitrohres (12) ausgerüstet ist.

3. Vorrichtung nach einem der vorangehenden Ansprüche,
dadurch gekennzeichnet,
daß wenigstens ein Quenchgasrohr (17) den Rohrbündelwärmetauscher (7) bis zum Austrittsbereich (10) der Wärmetauscherrohre (9) zum Einspeisen von Quenchgas durchsetzt.

4. Vorrichtung nach Anspruch 3,
dadurch gekennzeichnet,
daß eine Mehrzahl von Quenchgaszuführleitungsrohren (17) das Wärmetauscherrohrbündel durchsetzt und über eine gemeinsame Ringleitung (16) beaufschlagbar sind.

5. Vorrichtung nach einem der vorangehenden Ansprüche,
dadurch gekennzeichnet,
daß der nach oben aushebbare zentrische Wärmetauscher (7) einen unteren Rohrboden (19) aufweist, der auf einem Kragen (18) am unteren Ende des Katalysatorbettes (5) aufsitzt.

6. Vorrichtung nach Anspruch 5,
dadurch gekennzeichnet,
daß zwischen unterem Rohrboden (19) des Wärmetauschers (7) und dem Kragen (18) eine Dichtung (20), wie beispielsweise eine Labyrinthdichtung, vorgesehen ist.

7. Vorrichtung nach Anspruch 5 oder 6,
dadurch gekennzeichnet,
daß der untere Rohrboden (19) über eine Distanzverschraubung (21) mit dem unteren Kragen (19a) des Katalysatorbettes (5a) verschraubt ist.

8. Vorrichtung, insbesondere nach Anspruch 5,
dadurch gekennzeichnet,
daß die Ringleitung (16) mit den Quenchgasrohren an Flanschen von im Wärmetauscher (7) vorgesehenen Hüllrohren (26) nach oben auswechselbar befestigt ist.

9. Vorrichtung, insbesondere nach Anspruch 3,
dadurch gekennzeichnet,
daß das Quenchgasrohr (15) für ein folgendes Katalysatorbett (6) im Kopfbereich des ortsfest montierten zentrischen Ableitrohres (12) über eine Montageplatte am Kopf des Ableitrohres (12) nach oben ausbaubar befestigt ist.

10. Vorrichtung nach einem der vorangehenden Ansprüche,
dadurch gekennzeichnet,
daß der die Zuströmöffnung (11) aufweisende Rohrkopf des zentrischen Ableitrohres (12) an letzterem über eine von oben manipulierbare und lösbare flexible Verbindung befestigt ist.

## Claims

1. Apparatus for the catalytic treatment of nitrogen and hydrogen comprising at least one heat exchanger axially concentrically arranged in a pressure vessel and a catalyst bed surrounding the heat exchanger, a centrally disposed feed bell for feeding the gas to the tube nest of the heat exchanger and a deflection means for deflection of the gas leaving the heat exchanger tubes for them to flow through the first catalyst bed radially from the outside inwardly, characterised in that provided in the interior of the first tube nest heat exchanger (7) is a concentric discharge tube (12) for the gas which leaves the first catalyst bed (5) and which flows from the bottom upwardly around the heat exchanger tubes (9) as viewed in the direction of the force of gravity, wherein the discharge tube (12) is provided with upper collecting openings (11) for said gas.

2. Apparatus according to claim 1 characterised in that the central discharge tube (12) is provided with a quench gas feed conduit (15) for feeding a regulating gas into the head region of the central discharge tube (12).

3. Apparatus according to one of the preceding claims characterised in that at least one quench gas tube (17) passes through the tube nest heat exchanger (7) to the outlet region (10) of the heat exchanger tubes (9) for feeding in quench gas.

4. Apparatus according to claim 3 characterised in that a plurality of quench gas feed tubes (17) pass through the heat exchanger tube nest and can be supplied by way of a common rag conduit (16).

5. Apparatus according to one of the preceding claims characterised in that the central heat exchanger (7) which can be lifted out upwardly has a lower tube plate (19) which rests on a collar (18) at the lower end of the catalyst bed (5).

6. Apparatus according to claim 5 characterised in that provided between the lower tube plate (19) of the heat exchanger (7) and the collar (18) is a seal (20) such as for example a labyrinth seal.

7. Apparatus according to claim 5 or claim 6 characterised in that the lower tube plate (19) is screwed by way of a spacer screw bans (21) to the lower collar (19a) of the catalyst bed (5a).

8. Apparatus in particular according to claim 5 characterized in that the ring conduit (16) with the quench gas tubes is upwardly removably fixed to flanges of enclosure tubes (26) provided in the heat exchanger (7).

9. Apparatus in particular according to claim 3 characterised in that the guench gas tube (15) for a following catalyst bed (6) is upwardly removably fixed in the head region of the stationarily mounted central discharge tube (12) by way of a mounting plate to the head of the discharge tube (12).

10. Apparatus according to one of the preceding claims characterised in that the head of the central discharge tube (12), which has the feed flow opening (11), is fixed to the discharge tube by way of a releasable flexible connection which can be manipulated from above.

**Revendications**

1. Dispositif pour le traitement catalytique de l'azote et de l'hydrogène avec au moins un échangeur de chaleur agencé de façon concentrique et axialement dans un réservoir sous pression et un lit de catalyseur entourant celui-ci, avec une cloche d'amenée disposée centralement pour l'amenée du gaz à destination du faisceau tubulaire de l'échangeur de chaleur et avec une dérivation du gaz quittant les tubes de l'échangeur de chaleur pour le balayage du premier lit de catalyseur radialement de l'extérieur vers l'intérieur,
caractérisé en ce que
dans la partie intérieure du premier échangeur de chaleur à faisceau tubulaire (7) il est prévu un tube de dérivation concentrique (12) pour le gaz balayant les tubes de l'échangeur de chaleur (9) du bas vers le haut dans le sens de la gravité et quittant le premier lit de catalyseur (5), le tube de dérivation (12) étant muni d'ouvertures collectrices (11) pour ce gaz.

2. Appareil selon la revendication 1,
caractérisé en ce que
le tube de dérivation central (12) est muni d'une conduite d'amenée de gaz de traitement (15) pour l'alimentation d'un gaz de régulation dans la zone de tête du tube de dérivation central (12).

3. Dispositif selon l'une quelconque des revendications précédentes,
caractérisé en ce que
au moins un tube du gaz de traitement (17) traverse l'échangeur de chaleur à faisceau tubulaire (7) jusqu'à la zone de sortie (10) des tubes de l'échangeur de chaleur (9) pour l'amenée du gaz de traitement.

4. Dispositif selon la revendication (3),
caractérisé en ce que
plusieurs tubes d'amenée de gaz de traitement (17) traversent le faisceau tubulaire de l'échangeur de chaleur et alimentent une conduite circulaire commune (16).

5. Dispositif selon l'une quelconque des revendications précédentes,
caractérisé en ce que
l'échangeur de chaleur central (7) extrayable vers le haut présente une plaque tubulaire inférieure (19) qui repose sur une console (18) sur l'extrémité inférieure du lit de catalyseur (5).

6. Dispositif selon la revendication 5,
caractérisé en ce qu'entre
la plaque tubulaire inférieure (19) de l'échangeur de chaleur (7) et la console (18), il est prévu un joint d'étanchéité (20), par exemple un joint d'étanchéité en labyrinthe.

7. Dispositif selon la revendication 5 ou 6, caractérisé en ce que la plaque tubulaire inférieure (19) est vissée au moyen d'un système de vissage à distance (21) sur la console inférieure (19a) du lit du catalyseur (5a).

8. Dispositif, notamment selon la revendication 5, caractérisé en ce que la conduite tubulaire (16) avec les tubes de gaz de traitement sont fixés de façon amovible vers le haut sur les brides des tubes de gainage (26) prévues dans l'échangeur de chaleur (7).

9. Dispositif, notamment selon la revendication 3, caractérisé en ce que le tube de gaz de traitement (15) destiné au lit de catalyseur suivant (6) dans la zone de tête du tube de dérivation central monté à demeure (12) est fixé de façon amovible vers le haut par l'intermédiaire d'une plaque de montage sur la tête du tube de dérivation (12).

10. Dispositif selon l'une des revendications précédentes, caractérisé en ce que la tête tubulaire comportant l'ouverture d'amenée (11), de la conduite de dérivation centrale (12) est fixée sur cette dernière au moyen d'un raccord souple amovible manipulable vers le haut.

-1/3-

FIG.1

FIG.2

FIG.3

FIG.4

FIG.5